Europäisches Patentamt

European Patent Office

Office européen des brevets

(11) Veröffentlichungsnummer: **0 441 769 B1**

(12) **EUROPÄISCHE PATENTSCHRIFT**

(45) Veröffentlichungstag der Patentschrift: **13.09.95**

(21) Anmeldenummer: **91890019.2**

(22) Anmeldetag: **31.01.91**

(51) Int. Cl.⁶: **F02D 41/26**, F02D 45/00, B60K 31/00, F02P 17/00

(54) Verfahren und Einrichtung zur Signalauswertung.

(30) Priorität: **09.02.90 AT 302/90**

(43) Veröffentlichungstag der Anmeldung:
**14.08.91 Patentblatt 91/33**

(45) Bekanntmachung des Hinweises auf die
Patenterteilung:
**13.09.95 Patentblatt 95/37**

(84) Benannte Vertragsstaaten:
**BE CH DE DK ES FR GB IT LI NL SE**

(56) Entgegenhaltungen:
**EP-A- 0 117 789**
**EP-A- 0 280 663**
**EP-A- 0 282 732**
**US-A- 4 301 778**

**PATENT ABSTRACTS OF JAPAN vol. 9, no.
120 (P-358) 24. Mai 1985 & JP-A-60 006 872
(FUJITSU TEN KK.) 14. Januar 1985**

(73) Patentinhaber: **AVL Gesellschaft für Verbrennungskraftmaschinen und Messtechnik
mbH.Prof.Dr.Dr.h.c. Hans List
Kleiststrasse 48
A-8020 Graz (AT)**

(72) Erfinder: **Ponticelli, Martin, Dipl.Ing.
Ruckerlberggürtel 17
A-8010 Graz (AT)**
Erfinder: **Lackner, Gerald, Dipl.Ing.
Rudolf List Gasse 29
A-8010 Graz (AT)**

(74) Vertreter: **Klein, Adam, Dipl.Ing. et al
Patentanwälte Klein & Pinter OEG
Fasangasse 49
A-1030 Wien (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren sowie eine Einrichtung zur Auswertung der Meßsignale eines Aufnehmers, insbesonders zur Auswertung der Signale eines induktiven Meßwertaufnehmers zur Drehpositionsmarkierung an einer Brennkraftmaschine, wobei das Aufnehmersigal einer Auswerteeinheit zugeführt wird, mit bzw. in der insbesonders das Auftreten von Nulldurchgängen bestimmt wird, und wobei in einem Nulldurchgangszweig der Auswerteeinheit die Nulldurchgänge im Aufnehmersignal bestimmt und in einem parallelen Freigabezweig nach Transformation des Aufnehmersignals die signifikaten Nulldurchgänge freigegeben werden.

Derartige Verfahren und Einrichtungen sind bekannt und ermöglichen beispielsweise die Erfassung und Verarbeitung der Signale von induktiven Meßwertaufnehmern, wie sie etwa bei Verbrennungskraftmaschinen in verschiedensten Anordnungen als Drehpositionsmarkierungsvorrichtungen eingesetzt werden. Dabei wird der durch Stromspeisung oder Permanentmangnet erzeugte magnetische Fluß durch eine Geberspule abhängig von ferromagnetischem Material in der näheren Umgebung derart beeinflußt, daß entsprechende Marken auf einer rotierenden Scheibe, die etwa auf der Kurbelwelle oder der Nockenwelle befestigt ist, bei Stiften als Flußmaximum bzw. bei Schlitzen als Flußminimum erfaßt werden. Dies entspricht jeweils einem Nulldurchgang der induzierten Geberspannung mit unterschiedlicher Tendenz.

Gängige Ausführungen sind beispielsweise Anordnungen zur Markierung des oberen Totpunktes (OT) mit einem oder mehreren, über den Umfang der Schwungscheibe verteilten Stiften oder Schlitzen und mit unterschiedlichen Winkelpositionen relativ zum physikalischen OT, sowie weiters Anordnungen zur Bestimmung bzw. Auswertung der Winkelgeschwindigkeit, wobei an einem Zahnkranz, beispielsweise dem Starterzahnkranz des Schwungrades, gemessen wird und unter Umständen zusätzlich eine OT-Markierung in Form einer definierten Lücke vorgesehen ist. Dabei ist zwischen zwei Fällen zu unterscheiden. Einerseits gibt es Anordnungen mit bekannter Polarität (Stift oder Schlitz mit verpolungsgeschützten Gebern) bzw. unwesentlicher Polarität (Zahnkranz); im Gegensatz dazu sind auch Anordnungen unbekannter, aber wesentlicher Polarität abzudecken, bei denen dann eine automatische Stift/Schlitz-Erkennung wünschenswert ist.

Abhängig von einer Vielzahl von Parametern, wie etwa Geberempfindlichkeit, Geberabstand, geometrische Ausführung der Marken, Umfangsgeschwindigkeit der Geberscheibe, ergibt sich üblicherweise ein sehr großer zu erfassender Spannungsbereich - typisch wird ein nutzbarer Bereich der Geberspannung von 20 $mV_{pp}$ bis 100 $V_{pp}$ gefordert. Um einen solchen Dynamikbereich mit der geforderten Genauigkeit in der Erfassung des Nulldurchganges verarbeiten zu können, wurde bei den bekannten Verfahren bzw. Einrichtungen der genannten Art bisher auf eine Verstärkungsregelung des Signales in Form einer AGC (Automatic Gain Control)-Schaltung oder in digitaler Form zurückgegriffen. Diese Verfahren beinhalten jedoch die Nachteile einer Einregelphase sowie eines großen Aufwandes bei der Regelung, wenn über einen großen Drehzahlbereich bei gleichzeitig großer Drehzahldynamik eine hohe Störsicherheit erreicht werden soll. Derartige Bedingungen treten z.B. dann auf, wenn transiente Motorzustände erfaßt werden sollen, wie sie z.B. eine dynamische Leistungsmessung (freies Hochbeschleunigen gegen das eigene Drehmoment) oder die Überprüfung der Leerlaufregelung (Unter- bzw. Überschwingen bei abruptem Lastwechsel) darstellen. Wenn dann gleichzeitig noch relativ gesehen niedrige Drehzahlen gemessen werden sollen (etwa die Starterdrehzahl bei einer Kompressionsmessung), sind mit üblicherweise vertretbarem Aufwand realisierte Schaltungskonzepte zumeist überfordert.

Zur Beseitigung der Drehzahlabhängigkeit der Größe des Nutzsignales ist beispielsweise aus der DE-OS 32 34 383 ein Verfahren bzw. eine zugehörige Einrichtung bekannt, wobei Markierungen einer rotierenden Scheibe mittels Induktivgeber so ausgewertet werden, daß das Gebersignal integriert und dann einem Schwellwertschalter zugeführt wird. Damit ist zwar der Nachteil der Drehzahlabhängigkeit der Größe des Nutzsignals beseitigt, nicht aber die übrigen diesbezüglichen Einflußgrößen wie Geberempfindlichkeit, Geberabstand oder geometrische Ausführung der Marken. Darüber hinaus sind integrierende Systeme mit herkömmlichen Geberscheiben empfindlich gegenüber niederfrequenten Störungen mit an sich niedrigem Pegel, wie sie beispielsweise zufolge eines Lagerspiels bei Starterdrehzahlen auftreten können, wenn die kreiselstabilisierenden Kräfte noch gering sind.

Weiters sind beispielsweise in der EP-A 83 594 bzw. EP-A 28 27 32 Verfahren und Einrichtungen zur Erzeugung drehzahlabhängiger Signalfolgen aus den Signalen induktiver Geber beschrieben, deren gemeinsames Merkmal es allerdings ist, daß nicht der Signalnulldurchgang ausgewertet wird, sondern eine möglichst exakte Triggerung bei einer bestimmten Signalgröße erfolgen soll. Da für bestimmte Messungen etwa an Verbrennungskraftmaschinen, beispielsweise für die Bestimmung des Förderbeginnwinkels am Dieselmotor, definitionsgemäß der Nulldurchgang der Bezugsgröße herangezogen werden muß, ist ein Einsatz dieser Verfahren nicht für alle bei der Diagnose von Verbrennungskraftmaschinen verwendeten Signale induktiver Geber geeignet. Darüber hinaus kann die Nachführung des Triggerniveaus durch Spitzenwertmesser mit einer bestimmten Entladezeitkonstante dann nur einen Kompromiß darstellen, wenn breite Drehzahlbänder bei hoher Motordynamik verarbeitet werden sollen, da die dabei gemmachten Ungenauigkeiten direkt in den Triggerzeitpunkt eingehen.

Weiters ist beispielsweise aus der US-A-4,301.778 bereits eine Einrichtung bzw. ein Verfahren der eingangs angesprochenen Art bekannt, wonach im genannten Zusammenhang auch parallele Freigabe- und Nulldurchgangszweige vorgesehen sind.

Aufgabe der vorliegenden Erfindung ist es, die angeführten Nachteile der bekannten Verfahren und Einrichtungen der eingangs genannten Art zu vermeiden und insbesonders ein Verfahren sowie eine Einrichtung zur Auswertung der Meßsignale eines Aufnehmers, insbesonders zur Auswertung der Signale eines induktiven Meßwertaufnehmers zur Drehpositionsmarkierung an einer Brennkraftmaschine, so zu verbessern, daß mit einfachen Mitteln einerseits die Nachteile einer dynamischen Regelung vermieden werden und andererseits ein großer Dynamikbereich mit hoher Genauigkeit in der Erfassung des Nulldurchganges weitgehend störungsfrei und unbeeinflußt von den konkreten konstruktiven Gegebenheiten erfaßt werden kann.

Dies wird gemäß der vorliegenden Erfindung dadurch erreicht, daß im Freigabezweig das Aufnehmersignal nach logarithmischer Transformation einerseits einem Komparator zugeführt und andererseits auf Maxima untersucht wird, daß die gefundenen Maxima nach Abzug einer dem gewünschten Triggerpegel entsprechenden Spannung als zweite Eingangsgröße dem Komparator zugeführt werden, und daß das Ausgangssignal des Komparators als Freigabesignal für die unabhängig im Nulldurchgangszweig aus dem Aufnehmersignal bestimmten Nulldurchgänge verwendet wird. Das Meßsignal des induktiven Meßwertaufnehmers wird also wie bekannt in zwei Zweige aufgespalten; im Nulldurchgangszweig werden die für die Meßgenauigkeit letztendlich ausschlaggebenden Signalnulldurchgänge mit hoher Genauigkeit und insbesonders ohne Phasenverschiebung erfaßt - im parallelen Freigabezweig wird aus der Vielzahl der Nulldurchgänge, die etwa durch mechanische Unregelmäßigkeiten einer Geberscheibe oder durch Rauschen generiert werden, der jeweils signifikante Nulldurchgang freigegeben, wobei die Amplitude des Meßsignals des Aufnehmers relativ zum letztgültigen Ergebnis ausgewertet wird.

Gemäß der entsprechenden Ausgestaltung der erfindungsgemäßen Einrichtung ist vorgesehen, daß der Freigabezweig einen Logarithmierverstärker aufweist, dessen Ausgang einerseits mit einem Spitzenwertmesser und andererseits mit einem Eingang eines Komparators in Verbindung steht, daß der Ausgang des Spitzenwertmessers über einen Summierverstärker am zweiten Eingang des Komparators liegt, daß der Ausgang des Komparators mit einer Freigabeeinheit in einer Auswertelogik verbunden ist, welche andererseits mit dem Ausgang eines im Nulldurchgangszweig angeordneten Nulldurchgangsdetektors in Verbindung steht.

Das Aufnehmersignal kann in weiterer Ausgestaltung der Erfindung im Nulldurchgangszweig vor der Bestimmung der Nulldurchgänge verstärkt werden, wozu bei der erfindungsgemäßen Einrichtung ein Begrenzerverstärker im Nulldurchgangszweig vor dem Nulldurchgangsdetektor angeordnet ist. Dieser Begrenzerverstärker verstärkt auch das kleinstzulässige Signal soweit, daß die Offsetabweichung des nachfolgenden Nulldurchgangsdetektors keine störende Fehlerquelle bilden kann.

Im Freigabezweig ist schließlich in weiterer Ausgestaltung der Erfindung entweder ein Einweg-Gleichrichter oder aber ein Vollweg-Gleichrichter vor dem Logarithmierverstärker angeordnet. Die Variante mit dem Einweg-Gleichrichter ist vorgesehen für Signale bekannter Polarität oder Signale von Zahnscheiben oder dergleichen, bei denen die Polarität belanglos ist. Die Ausführung mit dem Vollweg-Gleichrichter ist vorgesehen für Signale unbekannter Polarität im Zusammenhang mit einer damit ermöglichten automatischen Stift/Schlitzerkennung.

Der Logarithmierverstärker liefert bei geeigneter Beschaltung folgende Transformation der Signale des Meßwertaufnehmers:

$$U_a = \ln \frac{U_e}{U_{ref}} + C$$

Das dermaßen transformierte Signal wird dann einerseits einem Komparator zugeführt und andererseits mit einem Spitzenwertmesser auf Maxima untersucht, welche dann beispielsweise auch in einer Halteverstärkerstufe gespeichert werden können, und nach Abzug einer Spannung, die dem gewünschten Triggerpegel entspricht, als zweite Eingangsgröße des Komparators dienen. Ein praxistauglicher Triggerpegel liegt beispielsweise bei 50 % des untransformierten Signals, was sowohl ein hohes Störniveau erlaubt, als auch genügend Reserven für dynamisches Motorverhalten läßt.

Nach der Beziehung $\ln (|x|/2) = \ln |x| - \ln 2$ wird in diesem Fall von der Haltespannung der Wert $\ln 2$ abgezogen und dem Komparator als Vergleichsspannung zugeführt. Selbstverständlich können aber je nach Anforderung andere Triggerpegel sinnvoll werden. Die eigentliche Auswertelogik kann dann entweder herkömmlich sequentiell-kombinatorisch aufgebaut sein oder aber durch einen Mikroprozessor gesteuert werden. Ihre Aufgabe ist die Pulsformung abhängig von den Komparator- und Nulldurchgangssignalen sowie die Steuerung des Spitzenwertmessers und des Halteverstärkers, wie auch die Vorgabe der Summierspannung und davon abhängig des Triggerpegels.

Bei der Variante mit Vollweg-Gleichrichter im Freigabezweig für Meßsignale unbekannter Polarität übernimmt die genannte Auswertelogik auch die automatische Stift/Schlitz-Erkennung über die zeitlichen Abstände der Impulsfolgen. Dabei wird der Umstand genutzt, daß der signifikante Nulldurchgang immer zwischen den zeitlich enger aufeinanderfolgenden Freigabekomparatorimpulsen liegt.

Die Erfindung wird im folgenden noch anhand der in der Zeichnung schematisch dargestellten Ausführung einer erfindungsgemäßen Einrichtung samt zugehörigen Signalfolgen näher erläutert.

Fig. 1 zeigt dabei ein teilweise schematisches Blockschaltbild einer erfindungsgemäßen Einrichtung,

Fig. 2 ein Beispiel für ein in der Praxis zu verarbeitendes Signal eines induktiven Meßwertaufnehmers,

Fig. 3 die prinzipiellen Signalzusammenhänge für den Fall der Einweg-Gleichrichtung und

Fig. 4 die entsprechenden Signalfolgen für den Fall der Vollweg-Gleichrichtung.

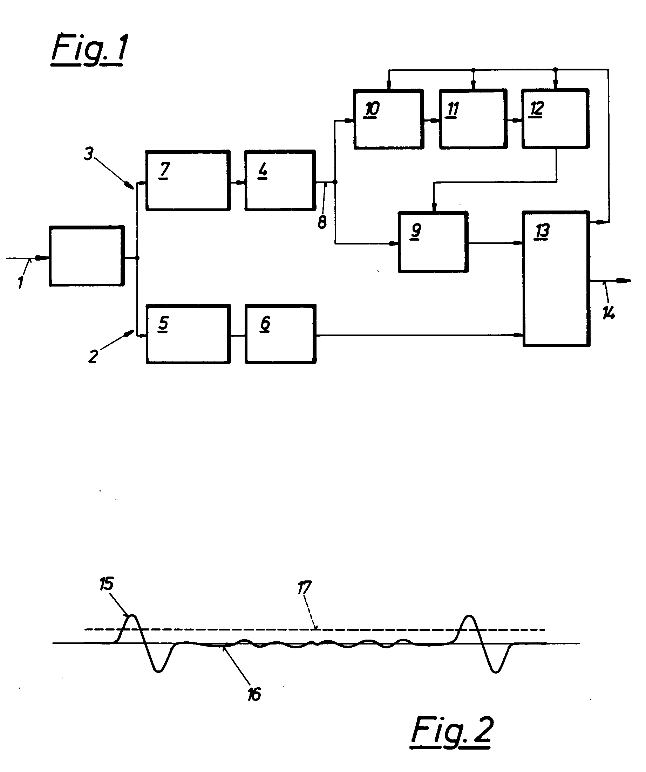

Wie im Blockschaltbild der erfindungsgemäßen Einrichtung in Fig. 1 ersichtlich ist, wird das auf einer Leitung 1 vom hier nicht dargestellten induktiven Meßwertaufnehmer, beispielsweise einem OT-Sensor an einer mit der Kurbelwelle einer Brennkraftmaschine drehverbundenen Geberscheibe, kommende Signal in zwei Zweige 2, 3 aufgespalten. Im Nulldurchgangszweig 2 wird der für die Meßgenauigkeit ausschlaggebende Signalnulldurchgang mit hoher Genauigkeit und insbesonders ohne Phasenverschiebung durch den im parallelen Freigabezweig 3 angeordneten Logarithmierverstärker 4 erfaßt. Im Freigabezweig 3 wird aus der Vielzahl der Nulldurchgänge, die etwa durch mechanische Unregelmäßigkeiten an der hier nicht dargestellten Geberscheibe oder durch Rauschen generiert werden, der signifikante Nulldurchgang freigegeben, wobei die Amplitude des Meßwertaufnehmersignals relativ zum letztgültigen Ereignis ausgewertet wird.

Der Nulldurchgangszweig 2 enthält einen Begrenzerverstärker 5, der auch das kleinstzulässige Signal soweit verstärkt, daß die Offsetabweichung des nachfolgenden Nulldurchgangsdetektors 6 keine störende Fehlerquelle bildet.

Der Freigabezweig 3 weist vor dem oben bereits angesprochenen Logarithmierverstärker 4 einen Gleichrichter 7 auf, der entweder als Einweg-Gleichrichter für Signale bekannter Polarität oder Signale von Zahnscheiben, oder als Vollweg-Gleichrichter für Signale unbekannter aber wesentlicher Polarität ausgebildet ist. Der Logarithmierverstärker 4 liefert bei entsprechender Beschaltung die eingangs angesprochene logarithmische Transformation des Meßwertaufnehmersignals, womit auch ohne die Nachteile einer Verstärkungsregelung ein weiter Dynamikbereich abdeckbar ist. Das am Ausgang 8 des Logarithmierverstärkers 4 vorliegende Signal wird einerseits einem Komparator 9 zugeführt und andererseits mit einem Spitzenwertmesser 10 auf Maxima untersucht, die dann in einer Halteverstärkerstufe 11 gespeichert werden und nach Abzug einer Spannung, die dem gewünschten Triggerpegel entspricht (im Summierverstärker 12), als zweite Eingangsgröße des Komparators 9 dienen.

Für den eingangs bereits als Beispiel angesprochenen Fall eines bei etwa 50 % des untransformierten Signals liegenden Triggerpegels wird von der Haltespannung der Wert 1n 2 abgezogen und dem Komparator 9 als Vergleichsspannung zugeführt.

Die Auswertelogik 13 kann entweder herkömmlich sequentiell-kombinatorisch aufgebaut sein oder durch einen Mikroprozessor gesteuert werden. Ihre Aufgabe ist die Pulsformung abhängig von den Komparator- und Nulldurchgangssignalen, die Steuerung des Spitzenwertmessers 10 und des Halteverstärkers 11, sowie auch die Vorgabe der Summierspannung und davon abhängig des Triggerpegels. Am Ausgang 14 dieser Auswertelogik 13 ist schließlich das geformte Meßsignal - beispielsweise dem tatsächlichen Auftreten des OT entsprechend - abgreifbar.

Im Signaldiagramm nach Fig. 2 ist mit 15 das Nutzsignal, mit 16 das Störsignal - beispielsweise bedingt durch Rauschen - und mit 17 ein auf etwa 50 % des maximalen Nutzsignals liegender Triggerpegel bezeichnet.

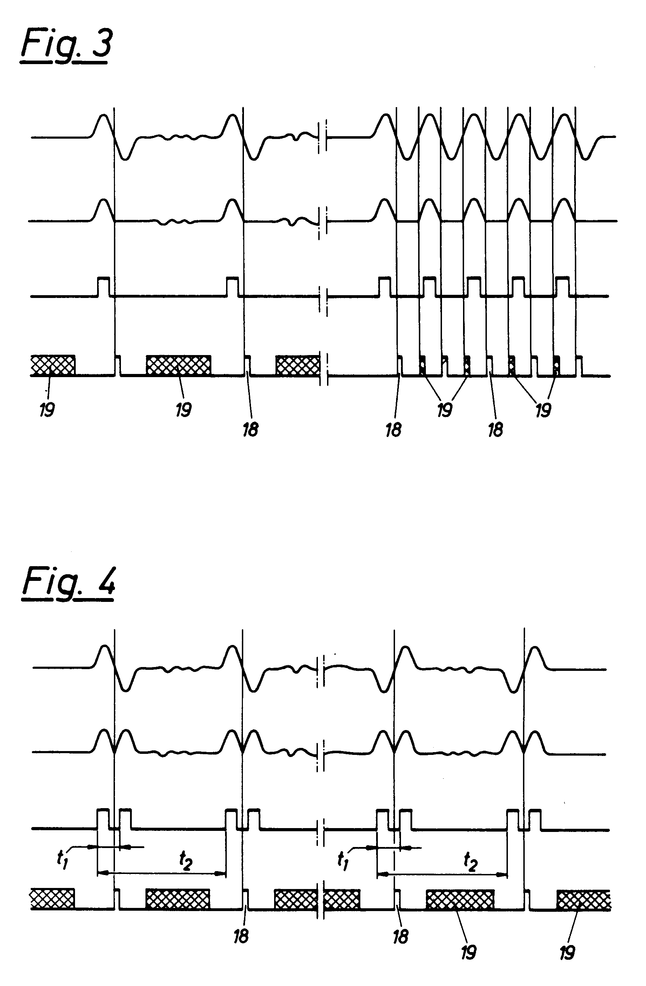

Die prinzipiellen Signalzusammenhänge für den Fall der Einweg-Gleichrichtung sind in Fig. 3 dargestellt. Oben ist dabei der Verlauf eines Eingangssignals mit festgelegter Polarität (links) bzw. mit unwesentlicher Polarität (beispielsweise vom Schwungradzahnkranz - rechts) dargestellt. Darunter folgt der Signalverlauf nach der Einweg-Gleichrichtung.

Als nächstes folgt darunter das Ausgangs- bzw. Freigabe-Signal des Komparators (9 in Fig. 1) und schließlich in der letzten Reihe das am Ausgang des Nulldurchgangsdetektors (6 in Fig. 1) erhaltene Nulldurchgangs-Signal. Nach der Auswertelogik führen nur die signifikanten Nulldurchgänge - mit 18 bezeichnet - zu Signalpeaks - die in den Bereichen 19 liegenden, beispielsweise von Störsignalen oder Rauschen bzw. den falschen Zahnflanken ausgelösten nicht signifikanten Nulldurchgänge werden ausgeblendet.

Fig. 4 zeigt schließlich die entsprechenden Signalzusammenhänge für den Fall der Vollweg-Gleichrichtung für Signale unbekannter aber wesentlicher Polarität. Oben ist wieder das Eingangssignal (beispielsweise auf der Leitung 1 gemäß Fig. 1) aufgetragen; rechts für den Fall eines Stiftes und links für den Fall eines Schlitzes als Auslöser. In der zweiten Reihe ist das Signal nach Vollweg-Gleichrichtung aufgetragen. Als nächstes folgt darunter wiederum das Freigabe- bzw. Komparatorausgangssignal. In der letzten Reihe ist das Signal am Ausgang des Nulldurchgangsdetektors (6 in Fig. 1) aufgetragen, wobei hier der Umstand ausgenutzt wird, daß der signifikante Nulldurchgang 18 immer zwischen den zeitlich enger aufeinanderfolgenden Freigabe-Komparatorimpulsen liegt ($t_1$ < $t_2$). Die von der Auswertelogik ausgeblendeten, von Störsignalen bzw. Rauschen ausgelösten Nulldurchgänge liegen auch hier wiederum in den Bereichen 19.

## Patentansprüche

1. Verfahren zur Auswertung der Meßsignale eines Aufnehmers, insbesonders zur Auswertung der Signale eines induktiven Meßwertaufnehmers zur Drehpositionsmarkierung an einer Brennkraftmaschine, wobei das Aufnehmersignal einer Auswerteeinheit zugeführt wird, mit der das Auftreten von Nulldurchgängen bestimmt wird, wobei in einem Nulldurchgangszweig (2) der Auswerteeinheit die Nulldurchgänge im Aufnehmersignal bestimmt und in einem parallelen Freigabezweig (3) nach Transformation des Aufnehmersignals die signifikanten Nulldurchgänge freigegeben werden,
   **dadurch gekennzeichnet,** daß im Freigabezweig (3) das Aufnehmersignal nach logarithmischer Transformation einerseits einem Komparator (9) zugeführt und andererseits auf Maxima untersucht wird, daß die gefundenen Maxima nach Abzug einer dem gewünschten Triggerpegel entsprechenden Spannung als zweite Eingangsgröße dem Komparator (9) zugeführt werden, und daß das Ausgangssignal des Komparators (9) als Freigabesignal für die unabhängig im Nulldurchgangszweig (2) aus dem Aufnehmersignal bestimmten Nulldurchgänge verwendet wird.

2. Verfahren nach Anspruch 1, dadurch gekennzeichnet, daß das Aufnehmersignal im Nulldurchgangszweig (2) vor der Bestimmung der Nulldurchgänge verstärkt wird.

3. Verfahren nach Anspruch 1 oder 2, zur Aufbereitung der Signale von induktiven Gebern bekannter oder nicht ausschlaggebender Polarität, dadurch gekennzeichnet, daß im Freigabezweig (3) eine Einweg-Gleichrichtung des Signals erfolgt und der jeweils auf den Komparatorimpuls folgende Nulldurchgang als signifikant verarbeitet wird.

4. Verfahren nach einem der Ansprüche 1 bis 2, zur Aufbereitung der Signale von induktiven Gebern unbekannter Polarität, dadurch gekennzeichnet, daß im Freigabezweig (3) eine Vollweggleichrichtung des Signales erfolgt und der signifikante Nulldurchgang durch Verarbeitung der zeitlichen Abstände der Komparatorimpulse bestimmt wird.

5. Einrichtung zur Auswertung der Meßsignale eines Aufnehmers, insbesonders zur Auswertung der Signale eines induktiven Meßwertaufnehmers zur Drehpositionsmarkierung an einer Brennkraftmaschine, mit einer mit dem Aufnehmer verbundenen Auswerteeinheit, in der das Auftreten von Nulldurchgängen im Aufnehmersignal bestimmbar ist, wobei die Auswerteeinheit einen Nulldurchgangszweig (2) sowie einen Freigabezweig (3) aufweist, die jeweils mit dem Aufnehmersignal versorgt sind, dadurch gekennzeichnet, daß der Freigabezweig (3) einen Logarithmierverstärker (4) aufweist, dessen Ausgang (8) einerseits mit einem Spitzenwertmesser (10) und andererseits mit einem Eingang eines Komparators (9) in Verbindung steht, daß der Ausgang des Spitzenwertmessers (10) über einen Summierverstärker (12) am zweiten Eingang des Komparators (9) liegt, daß der Ausgang des Komparators (9) mit einer Freigabeeinheit in einer Auswertelogik (13) verbunden ist, welche andererseits mit dem Ausgang eines im Nulldurchgangszweig (2) angeordneten Nulldurchgangsdetektors (6) in Verbindung steht.

6. Einrichtung nach Anspruch 5, dadurch gekennzeichnet, daß im Nulldurchgangszweig (2) vor dem Nulldurchgangsdetektor (6) ein Begrenzerverstärker (5) angeordnet ist.

7. Einrichtung nach Anspruch 5 oder 6, dadurch gekennzeichnet, daß im Freigabezweig (3) vor dem Logarithmierverstärker (4) ein Einweg-Gleichrichter (7) angeordnet ist.

8. Einrichtung nach Anspruch 5 oder 6, dadurch gekennzeichnet, daß im Freigabezweig (3) vor dem Logarithmierverstärker (4) ein Vollweg-Gleichrichter (7) angeordnet ist.

## Claims

1. A process for evaluating the measured signals from a pick-up, in particular for evaluating the signals from an inductive pick-up for indicating angular position in an internal combustion engine, the signal being fed to an evaluating device by which the occurrence of zero crossings is determined, the zero crossings in the signal being determined in a zero crossing branch (2) and the significant zero crossings being indicated in a parallel indicating branch (3) after transformation of the picked-up signal, characterised in that in the indicating branch (3) the signal which is picked-up is after logarithmic transformation on the one hand fed to a comparator (9) and on the other hand tested for maxima, that the maxima which are found are fed after subtraction of a voltage corresponding to the desired triggering level as second input magnitudes to the comparator (9) and that the output signal of the comparator (9) is employed as indicating signal for the zero crossings determined from the picked-up signal independently in the zero crossing branch (2).

2. A process according to claim 1, characterised in that the picked-up signal is amplified in the zero crossing branch (2) before determination of the zero crossings.

3. A process according to claim 1 or 2 for handling signals from inductive transmitters of known or of irrelevant polarity characterised in that in the indicating branch (3) a half-wave rectification of the signal takes place and the respective zero crossing which follows to the comparator pulse is treated as significant.

4. A process according to one of claims 1 to 2 for handling signals from inductive transmitters of unknown polarity, characterised in that in the indicating branch (3) a full-wave rectification of the signal takes place and the significant zero crossing is determined by handling of the spacing in time of the comparator pulses.

5. Means for evaluating the measured signals form a pick-up, in particular for evaluating the signals from an inductive pick-up for indicating angular position in an internal combustion engine, with an evaluating unit which is connected to the pick-up and in which the occurrence of zero crossings in the signal is determined, the evaluating unit comprising a zero-crossing branch (2) and an indicating branch (3) each supplied with the picked-up signal, characterised in that the indicating branch (3) has a logarithmic amplifier (4) of which the output (8) is connected on the one hand to a peak value measuring instrument (10) and on the other hand to one input of a comparator (9), that the output of the peak value measuring instrument (10) is connected thorough a summing amplifier (12) to a second input of the comparator (9); that the output of the comparator (9) is connected to an indicating unit in an evaluating logic circuit (13), which on the other hand is connected to the output of a zero crossing detector (6) arranged in the zero crossing branch (2).

6. Means according to claim 5, characterised in that a limiting amplifier (5) is arranged in the zero crossing branch (2) ahead of the zero crossing detector (6).

7. Means according to claim 5 or 6, characterised in that a half-wave rectifier (7) is arranged in the indicating branch (3) ahead of the logarithmic amplifier (4).

8. Means according to claim 5 or 6, characterised in that a full-wave rectifier (7) is arranged in the indicating branch (3) ahead of the logarithmic amplifier (4).

## Revendications

1. Procédé d'analyse d'un signal de mesure d'un récepteur en particulier pour l'analyse des signaux d'un capteur inductif de valeur de mesure pour le marquage de la position angulaire sur une machine à combustion interne, dans lequel le signal du récepteur est envoyé à une unité d'analyse au moyen de laquelle les passages à zéro sont déterminés, et dans lequel, dans une branche de passage par zéro (2) de l'unité d'analyse, on détermine les passages par zéro du signal du récepteur et dans une branche parallèle de validation (3), les passages par zéro significatifs sont validés après transformation du signal du récepteur, caractérisé en ce que dans la branche de validation (3), le signal du récepteur est fourni après transformation logarithmique, d'une part, à un comparateur (9) et d'autre part est examiné pour déterminer la présence de valeurs maximales, en ce que les valeurs maximales trouvées auxquelles on soustrait une tension qui correspond au niveau de déclenchement souhaité, sont fournies en tant que deuxième grandeur d'entrée au comparateur (9) et en ce que le signal de sortie du comparateur (9) est utilisé comme signal de validation des passages par zéro déterminés de façon indépendante dans la branche de passage par zéro (2) à partir du signal reçu.

2. Procédé selon la revendication 1, caractérisé en ce que le signal du récepteur est amplifié dans la branche de passage par zéro (2) avant la détermination des passages par zéro.

3. Procédé selon la revendication 1 ou 2, pour la mise en forme de signaux de polarité connue ou non significative Provenant de détecteurs inductifs, caractérisé en ce que le signal subit un redressement mono-alternance dans la branche de validation (3) et en ce que le passage par zéro qui suit dans chaque cas l'impulsion du comparateur est considéré comme significatif.

4. Procédé selon l'une des revendications 1 ou 2 pour la mise en forme de signaux de polarité inconnue provenant de détecteurs inductifs, caractérisé en ce que dans la branche de validation (3), un redressement double-alternance du signal est réalisé et en ce qu'on détermine le passage par zéro significatif grâce à un traitement des intervalles temporels des impulsions du comparateur.

5. Dispositif d'analyse de signal de mesure d'un capteur, en particulier pour l'analyse de signaux d'un capteur inductif de mesure pour le marquage de la position angulaire dans une machine à combustion interne avec une unité d'analyse reliée au capteur susceptible de détecter les passages par zéro du signal reçu du capteur, l'unité d'analyse présentant une branche de passage par zéro (2) ainsi qu'une branche de validation (3) qui reçoivent toutes les deux le signal du capteur, caractérisé en ce que la branche de validation (3) est munie d'un amplificateur logarithmique (4) dont la sortie (8) est reliée, d'une part, à un dispositif de mesure de valeur de crête (10), et d'autre part, à l'entrée d'un comparateur (9) en ce que la sortie du dispositif de mesure de valeur de crête (10) est reliée, via un amplificateur additionneur (12) à la deuxième entrée du comparateur (9), en ce que la sortie du comparateur (9) est reliée à une unité de validation dans une logique d'analyse (13) qui est d'autre part reliée à la sortie d'un détecteur de passage par zéro (6) disposé dans la branche de passage par zéro (2).

6. Dispositif selon la revendication 5, caractérisé en ce qu'un amplificateur de limitation (5) est disposé dans la branche de passage par zéro (2) avant le détecteur de passage par zéro (6).

7. Dispositif selon la revendication 5 ou 6, caractérisé en ce qu'un redresseur mono-alternance (7) est disposé dans la branche de validation (3) avant l'amplificateur logarithmique.

8. Dispositif selon la revendication 5 ou 6, caractérisé en ce qu'un redresseur double-alternance (7) est disposé dans la branche de validation (3) avant l'amplificateur logarithmique (4).

_Fig.1_

_Fig.2_

_Fig. 3_

_Fig. 4_